# EUROPEAN PATENT APPLICATION

(11) **EP 3 042 728 A1**
(43) Date of publication of application: **13.07.2016**
(21) Application number: 16150063.2
(22) Date of filing: 04.01.2016
(51) Int. Cl.: B23B 27/04, B23B 5/40

(54) **TURNING TOOL AND SPERICITY PROCESSING METHOD**

(30) Priority: 06.01.2015 JP 2015001032
(71) Applicant: Nakamura-Tome Precision Industry Co., Ltd., Hakusan-shi, Ishikawa (JP)
(72) Inventor: OKUNO, Naoki, Hakusan-shi, Ishikawa 000-0000 (JP); FUKASAWA, Masayuki, Hakusan-shi, Ishikawa 000-0000 (JP)
(74) Representative: Isarpatent

(57) **Abstract**

To provide a turning tool capable of realizing high-precise sphericity processing for a high-hardness material and a high-precise sphericity processing method using the tool.

Sphericity processing is performed by a circular tip in which a cutting edge has a circular shape and a radius of the circular shape is 2 to 5 mm and desirably 2 to 3 mm. As a holder, a shoulder formed between a front end of a shank and the tip is provided only at one side surface of the shank, the other holder side surface is formed in a straight shape, and a clamping portion of the front end of the shank is not provided with a protrusion portion provided in a cutting-off bite holder of the related art.

## Description

### TECHNICAL FIELD

The present invention relates to a turning tool suitably used to perform high-precise sphericity processing on a high-hardness material such as corrosion-resistant or heat-resistant alloy which is not easily cut, and relates to a sphericity processing method using the tool.

### BACKGROUND ART

A turning tool includes a holder and a tip (a blade edge). The holder is formed such that a front end of a shank formed of a squared metal having a square cross-section is provided with a clamping portion used to fix the tip thereto. The tip has a size of several millimeters and the shank has a cross-section of 20 mm or 25 mm square. A step (hereinafter, referred to as a "shoulder") is formed between the tip and the shank based on a difference in dimension.

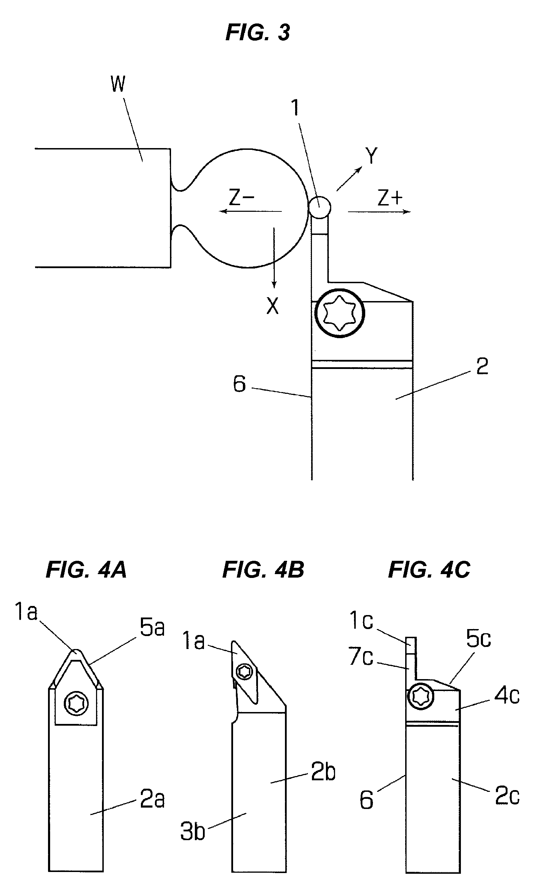

Fig. 4 is a diagram illustrating a shape example of a turning tool (a bite) for processing an outer periphery. Here, Fig. 4(a) is an example of a straight bite, Fig. 4(b) is an example of an inclined bite, and Fig. 4(c) is an example of a known bite called a cutting-off bite. Reference Numerals 1 a and 1 c indicate tips. Reference Numerals 2a, 2b, and 2c indicate holders. The straight bite has a symmetrical shape when viewed from the upside (cutting face), and a shoulder 5a is inclined. In the inclined bite, the tip 1 a is attached to a position at the left or right sides of the shank 3b of the holder, and the shoulder has an asymmetrical shape. In the cutting-off bite, a shoulder 5c is provided only at one side and the opposite side surface 6 has a straight shape. The tip 1 c includes a cutting edge which is parallel to a rotation axis of a work and is fixed to a front end of a protrusion portion 7c extending from the front end of the shank so that the width is slightly narrower than the width of the tip.

As the tip, a throw-away (disposable) tip having a triangle shape, a square shape, or a ridge shape is used in many cases, and a corner portion having a small circular-arc portion (a nose R) is used as a cutting edge. In the case of the throw-away tip, when the cutting edge is worn, a new tip is attached and a corner portion thereof is used as a cutting edge. The tip 1 a attached to the straight bite or the inclined bite is a tip with such a shape.

In turning, a spherical surface can be processed in a manner such that a cutter holder moves along two axes, that is, an axis (which is the Z axis of a lathe and will be referred to as a "work axis") parallel to a rotation axis of a work and an axis (the X axis of the lathe) perpendicular thereto and a blade edge of a tool attached to the cutter holder moves in a circular motion. When a spherical surface surpassing a hemisphere is formed on the front end of the work (hereinafter, referred to as "sphericity processing"), as shown in Fig. 3, there is a need to prevent an interference between a work w and a holder 2 when the tip 1 of the tool advances to the rotation center of the work w. For this reason, a bite having a shoulder at both sides as in the straight bite cannot be used.

### SUMMARY OF THE INVENTION

### PROBLEM TO BE SOLVED BY THE INVENTION

The sphericity processing is needed to manufacture a component used in a joint of an arm swinging three-dimensionally. In order that the arm swings precisely and high durability is obtained while a large load is applied to the joint, a high-precise spherical surface having wear resistance is needed and high-precise sphericity processing for a high-hardness material is needed.

When the hardness of the work to be processed increases, the abrasion of the cutting edge increases during the processing. When a general tip having a small blade edge circle radius (nose R) is used in the sphericity processing for the high-hardness material, the tip needs to be replaced frequently due to the large abrasion of the cutting edge. Further, the processing precision is degraded due to the abrasion of the cutting edge. That is, since the cutting edge is abraded largely in the tip of the small nose R, a problem arises in that the tip is not suitable in the sphericity processing for the high-hardness material.

Meanwhile, there is known a tip having a circular cutting edge called a circular tip. When sphericity processing is performed by the circular tip, a processing point moves in accordance with the circular motion of the blade edge. Thus, a cutting edge abrasion degree decreases, and hence processing surface precision is improved. For this reason, high-precise sphericity processing can be performed. However, since there is not provided a holder attached with the circular tip for the sphericity processing, there is no attempt for the sphericity processing using the circular tip.

An object of the invention is to provide a turning tool capable of realizing high-precise sphericity processing for a high-hardness material and a high-precise sphericity processing method using the tool.

### MEANS FOR SOLVING PROBLEM

The inventors found improvement in sphericity by performing sphericity processing for a high-hardness material using the circular tip 1. However, a processing reaction force increased compared to the case of the general tip 1 a having a small nose R, and the demanded sphericity could not be realized in the processing using the cutting-off bite holder 2c of the related art.

In a sphericity processing method of the invention, the circular tip 1 of which the radius of the circle of the cutting edge is 2 to 5 mm and desirably 2 to 3 mm is used as a tip in the sphericity processing for the high-hardness material in turning. As a holder holding the tip 1, a holder 2 is used in which a shoulder 5 is provided only at one side surface of a shank 3, the other holder side surface 6 is formed in a straight shape, and a comparatively long protrusion portion 7c (see Fig. 4(c)) provided in the cutting-off bite holder of the related art is not provided in a clamping portion 4 of a front end of the shank.

In a turning tool for sphericity processing of the invention, the protrusion length of the tip 1 from the shoulder 5 of the front end of the shank 3 is shortened. Accordingly, when a load of 5 kg is applied to the tip 1 in the work axis direction and the shank axis direction during the processing of the work, the displacement of the tip 1 in each direction is set to 8 µm or less and desirably 6 µm or less. Meanwhile, a difference in displacement in both directions is set to 4 µm or less and desirably 2 µm or less.

As understood from the shape of the bite used for turning, a bending deformation occurs due to an external force in the work axis direction, and a compression deformation occurs due to an external force in the shank axis direction. Generally, the compression deformation is smaller than the bending deformation. Accordingly, in general, the deformation of the shank 3 considered as one of factors causing degradation in sphericity during sphericity processing is large in the work axis direction and is small in the shank axis direction.

Here, when the sphericity processing of the work is performed by an NC machine, a correction value corresponding to the deformation of the shank 3 in the work axis direction and the shank axis direction is set in the NC machine and is used for the processing. Accordingly, a difference in deformation of the shank 3 in the work axis direction and the shank axis direction is removed, and hence the sphericity processing can be performed with higher precision.

### EFFECT OF THE INVENTION

In the sphericity processing for the high-hardness material, particularly, the sphericity processing with a curvature radius of about 10 to 40 mm, the circular tip 1 can be used in which the cutting edge is circular and the radius of the circle is about 2 to 3 mm. Thus, the lifetime of the tip is increased and the precision of the processed spherical surface can be improved.

And, since the holder 2 is formed in the shape in which a deformation for the processing reaction force in the work axis direction is small and a difference in deformation in the work axis direction and the shank axis direction is small, there is an effect that the high-precise sphericity processing can be realized even when a large cutting reaction force is exerted.

According to the examination of the inventors based on the test of the sphericity processing for the high-hardness material, the sphericity was limited to about 40 µm in the sphericity processing using the ridge tip having a nose R of 0.3 mm. On the contrary, when the holder was formed in the above-described shape by using the circular tip of which the radius of the circle of the cutting edge was 2.5 mm, the sphericity was largely improved to 9 µm, and the lifetime of the blade edge was improved about 8 times.

### BRIEF DESCRIPTION OF DRAWINGS

Fig. 1 is a top view illustrating a bite according to an embodiment of the invention (which is a diagram when viewed from a cutting face);
Fig. 2 is a top view illustrating a bite in which a circular tip is attached to a cutting-off bite holder of the related art;
Fig. 3 is a diagram illustrating a positional relation between a bite and a work during sphericity processing; and
Fig. 4 is a top view illustrating an example of a general bite.

### MODE(S) FOR CARRYING OUT THE INVENTION

Hereinafter, the invention will be described in detail by referring to the drawings illustrating a bite of the related art used in a lathe and a bite of the invention.

The sphericity of a spherical surface was limited to about 40 µm when sphericity processing was performed on a high-hardness material by a bite having a structure in which a ridge tip having a nose R of 0.3 mm was attached as a tip 1 a to a bite holder of the related art shown in Fig. 4(b).

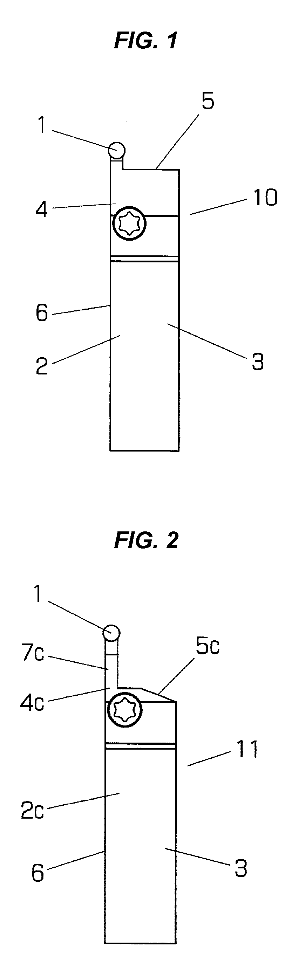

Fig. 2 is a diagram illustrating a bite 11 in which a circular tip 1 of which a radius of a circle of a cutting edge is 2.5 mm is attached to a cutting-off bite holder 2c of the related art. As the cutting-off bite holder, a plurality of types is provided. Among these, the circular tip 1 of which the radius of the circle of the cutting edge was 2.5 mm was attached to three types of cutting-off bite holders, and test processing of sphericity processing for the high-hardness material was performed. Here, the displacement of the tip 1c caused by the deformation of the holder 2c was measured when a load of 5 kg was applied to each of the circular tips 1 of the front ends of three types of cutting-off bite holders provided in the test processing in the work axis direction (the ±Z-direction), the shank axis direction (the X-axis direction) and the main component force direction (a direction perpendicular to the drawing paper and the Y-axis direction). As a result, in the first holder, the displacement of the tip was 13 µm in the ±Z-direction, 4 µm in the X-axis direction, and 2 µm in the main component force direction. In the second holder, the displacement of the tip was 5 µm in the +Z-axis direction, 9 µm in the -Z-axis direction, 2 µm in the X-axis direction, and 1 µm in the main component force direction. In the third holder, the displacement of the tip was 15 µm in the +Z-axis direction, 16 µm in the -Z-axis direction, 2 µm in the X-axis direction, and 2 µm in the main component force direction.

Then, when sphericity processing was performed on a work of a high-hardness material by the bite 11, the sphericity was about 15 µm. As a result, the sphericity of the spherical surface was largely improved compared to sphericity processing using a ridge tip having a nose R of 0.3 mm.

Fig. 1 is a top view illustrating a bite 10 having a structure of the invention. Here, one side surface 6 of the holder is formed in a straight shape, a shoulder 5 is provided only at the opposite side thereof, a clamping portion 4 is not provided with a protrusion portion 7c of the related art, and the protrusion length of the tip 1 from the shoulder 5 is short. The tip 1 is a circular tip of which a radius of a circle of a cutting edge is 2.5 mm as in Fig. 2.

When a load of 5 kg was applied to the tip 1 of the bite 10 of the embodiment in the Z-axis direction, the X-axis direction, and the main component force direction, the displacement of the tip 1 was 6 µm in the ±Z-axis direction, 4 µm in the X-axis direction, and 4 µm in the main component force direction.

Then, the sphericity was 9 µm when sphericity processing was performed on a high-hardness material by using the bite 10 of the embodiment shown in Fig. 1.

As described above, in the bite 10 shown in Fig. 1, a difference in displacement is 2 µm in the Z-axis direction and the X-axis direction when the same load is applied to the tip 1. Here, it is considered that sphericity processing can be performed more highly precisely in a manner such that the processing precision is measured by actually performing sphericity processing and feeding in the X-axis direction is corrected so as to remove a difference in displacement of the tip in the Z-axis direction and the X-axis direction of the holder.

According to the examination of the inventors, the sphericity of the work obtained by the sphericity processing using the bite 10 shown in Fig. 1 was measured, a correction value used only in the sphericity processing to correct the deviation in the Z-axis direction of the processed spherical surface was set in the NC machine, and the sphericity processing was performed with the same other conditions. As a result, the sphericity could be further improved to 5 µm.

As described above, according to the invention, it is possible to realize the high-precise sphericity processing which is not realized in the related art during the sphericity processing for the high-hardness material.

### EXPLANATIONS OF LETTERS OR NUMERALS

- 1:: circular tip
- 1a:: tip
- 2:: holder
- 2c:: cutting-off bite holder
- 3:: shank
- 4:: clamping portion
- 5:: shoulder
- 6:: holder side surface
- 7c:: protrusion portion

## Claims

1. A turning tool comprising:
a holder in which a shoulder is provided only at one side surface of a front end of a shank and the other side surface is formed in a straight shape; and
a tip which is fixed to a clamping portion of a front end of the holder having a straight side surface,
wherein the tip is a circular tip, and
wherein when a load of 5 kg is applied to the circular tip in a shank axis direction and a thrust force direction or a feeding component force direction orthogonal to the shank axis direction during the processing of a work in a state where a protrusion length of the circular tip from the front end of the shank is short, a displacement of the tip is 8 µm or less and a difference in displacement in both directions is 4 µm or less.

2. The turning tool according to claim 1,
wherein the circular tip is a circular tip of which a radius of a circle of a cutting edge is 2 to 5 mm.

3. The turning tool according to claim 1 or 2,
wherein the holder is a holder having a shape in which a protrusion length of a tip from a front end of a shank of a cutting-off bite holder is short.

4. A sphericity processing method in a lathe, comprising:
attaching the turning tool according to claim 1, 2, or 3 to a cutter holder of an NC lathe;
measuring a difference in dimension of a spherical surface processed by the turning tool in the Z-axis direction and the X-axis direction;
setting a correction value corresponding to the difference in dimension by an NC machine of the lathe; and
correcting a feeding instruction value of the cutter holder in the X-axis direction or the Z-axis direction by the set correction value during sphericity processing.
